# EUROPÄISCHE PATENTANMELDUNG

(11) **EP 2 315 422 A1**
(43) Veröffentlichungstag der Anmeldung: **27.04.2011**
(21) Anmeldenummer: 09174191.8
(22) Anmeldetag: 27.10.2009
(51) Int. Cl.: H04M 3/533

(54) **Steuerung eines für eine Telekommunikationsnetz eingerichteten Dienstes**

(30) Priorität: 26.10.2009 DE 102009050721
(71) Anmelder: Communology GmbH, 50670 Köln (DE)
(72) Erfinder: Kähler, Thomas, 50773 Köln (DE)
(74) Vertreter: Cohausz & Florack

(57) **Zusammenfassung**

Verfahren zur Steuerung eines für ein Telekommunikationsnetz 6 eingerichteten Dienstes durch einen externen Server 10 mit den Schritten serverseitiges Empfangen 26, 44 einer Dienstinformationen enthaltenden Mitteilung von einem netzseitigen Teilnehmer 2, serverseitiges Verbinden 46 mit dem Dienst, serverseitiges Emulieren des netzseitigen Teilnehmers 2 gegenüber dem Dienst unter Verwendung zumindest der empfangenen Dienstinformationen, serverseitiges Empfangen 30, 48 von Dienstdaten von dem Dienst aufgrund des Emulierens des netzseitigen Teilnehmers 2, und serverseitiges Weiterleiten 32, 50 der Dienstdaten an den netzseitigen Teilnehmer 2.

## Beschreibung

Der Gegenstand betrifft ein Verfahren zur Steuerung eines für ein Telekommunikationsnetz eingerichteten Dienstes durch einen externen Server. Darüber hinaus betrifft der Gegenstand ein Verfahren zur Steuerung eines für ein Telekommunikationsnetz eingerichteten Dienstes durch einen netzseitigen Teilnehmer. Auch betrifft der Gegenstand einen Server eingerichtet zur Steuerung eines für ein Telekommunikationsnetz eingerichteten Dienstes sowie ein Teilnehmermodul eingerichtet zur Steuerung eines für ein Telekommunikationsnetz eingerichteten Dienstes.

Dienste, sowie Mehrwertdienste werden in heutigen Telekommunikationsnetzen, insbesondere in Mobilfunknetzen, in einer großen Vielzahl angeboten. Zu den grundlegenden Diensten innerhalb eines Telekommunikationsnetzes können beispielsweise der Kurznachrichtendienst (SMS) als auch der Multimedianachrichtendienst (MNS) gezählt werden. Darüber hinaus kann auch eine netzintegrierte Anrufbeantworterfunktion zu den Diensten innerhalb eines Netzes gezählt werden. Bei diesen netzintegrierten Anrufbeantwortern stellen die Netzbetreiber innerhalb ihres Netzes einen Dienstserver zur Verfügung, der Anrufbeantworterfunktionalitäten für die Benutzer (Teilnehmer) zur Verfügung stellt.

Sogenannte virtuelle Netzbetreiber, welche kein eigenes Netz betreiben, sondern lediglich Zugriffskontingente für die Netze tatsächlicher Netzbetreiber einkaufen, sind auf die Bereitstellung solcher netzintegrierten Dienste durch die Netzbetreiber angewiesen und können keine eigenen Dienste anbieten, die eine Kontrolle des Telkommunikationsnetzes erfordern.

Insbesondere in Mobilfunknetzen operieren eine Vielzahl von virtuellen Netzbetreibern (VMOs), die alle auf die Bereitstellung von netzintegrierten Diensten durch die tatsächlichen Netzbetreiber angewiesen sind, um solche Dienste oder darauf aufbauende Dienste ihren Kunden ebenfalls anbieten zu können. Ein solcher möglicher Dienst ist beispielsweise der grafisch unterstützte Anrufbeantworter (Visual Voicemail), bei dem netzseitig empfangene Nachrichten zusammen mit den Teilnehmerdaten des anrufenden Teilnehmers (Dienstdaten) als Audiodateien an die Teilnehmerendgeräte geschickt werden. Auf den Teilnehmerendgeräten kann dann wahlfrei eine dieser Audionachrichten abgehört werden. Im Teilnehmerendgerät (Teilnehmermodul, Endgerät, Telefon, Mobiltelefon oder dergleichen) werden anhand der Teilnehmerkennungen den Audionachrichten Teilnehmerdaten, wie beispielsweise in dem Endgerät gespeicherte Teilnehmernamen oder Fotos, zugeordnet. Die Benutzer können somit aus einer Liste wahlfrei die gewünschten Nachrichten auswählen und abspielen. Die gesamten Nachrichten werden vom Dienst des Netzes auf das Teilnehmerendgerät übertragen und auf diesem gespeichert.

Um eine solche Funktionalität anbieten zu können, ist es notwendig, dass der Anrufbeantworterdienst des Netzbetreibers diese Funktionalität unterstützt. Aus diversen Gründen kann es sein, dass einige Netzbetreiber ausgewählte netzintegrierte Dienste nicht in Betrieb nehmen. Die virtuellen Netzbetreiber können dann ebenfalls solche Dienste ihren Kunden nicht anbieten.

Daher lag dem Gegenstand die Aufgabe zugrunde, unter Verwendung von netzseitig vorhandenen Diensten Mehrwertdienste für Teilnehmer zur Verfügung zu stellen. Diese Aufgabe wird gegenständlich durch ein Verfahren zur Steuerung eines für ein Telekommunikationsnetz eingerichteten Dienstes durch einen externen Server gemäß Anspruch 1 gelöst.

Der externe Server kann mittels einer Verbindung, beispielsweise einer Datenverbindung, einer Wählverbindung oder einer sonstiger Kommunikationsverbindung, mit dem Telekommunikationsnetz verbunden sein und somit eine Kommunikationsverbindung mit Teilnehmermodulen als auch mit netzseitig eingerichteten (netzinternen, netzintegrierten) Dienstservern aufnehmen. Auf dem externen Server können darüber hinaus weitere Funktionalitäten, die auf den netzseitigen Dienstserver nicht zur Verfügung gestellt werden, realisiert werden. Um diese Dienste den Teilnehmern anbieten zu können, ist erkannt worden, dass Dienstdaten durch einen externen Server von dem netzseitigen Dienstserver abgerufen werden können. Die abgerufenen Dienstdaten können dann durch den externen Server aufbereitet werden und dem Teilnehmermodul über das Telekommunikationsnetz zur Verfügung gestellt werden.

Um die Dienstdaten von dem netzseitigen Dienstserver abrufen zu können, ist es notwendig, gegenüber dem netzseitigen Dienstserver den Teilnehmer bzw. das Teilnehmermodul zu emulieren. Das kann heißen, dass der externe Server sich gegenüber dem Dienstserver so verhält, als sei ein tatsächlicher Teilnehmer bzw. ein Teilnehmermodul mit dem Dienstserver verbunden. Der netzseitige Dienstserver kann dann nicht erkennen, ob der Teilnehmer bzw. das Teilnehmermodul selbst auf den Dienst zugreift oder der externe Server. Somit kann es ermöglicht werden, dass die Dienstdaten durch den externen Server von dem Dienstserver, der netzseitig angeordnet ist, abgerufen werden können.

Um den Teilnehmer bzw. das Teilnehmermodul zu emulieren, wird vorgeschlagen, dass zumindest Dienstinformationen hierzu verwendet werden. Beispielsweise ist es möglich, dass ein netzseitiger Dienst Dienstinformationen an einen Teilnehmer übermittelt, wenn ein Ereignis eingetreten ist. Diese Dienstinformation zeigt dem Teilnehmer an, dass er einen bestimmte Dienst netzseitig abrufen kann. Um dem externen Server nun das Abrufen dieses Dienstes zu ermöglichen, wird vorgeschlagen, dass der externe Server diese Dienstinformationen zur Emulation des Teilnehmers bzw. Teilnehmermoduls nutzt.

Nachdem die Dienstinformationen an den Dienstserver übermittelt wurden, stellt der Dienstserver die entsprechenden Dienstdaten zur Verfügung. Diese werden gegenständlich von dem externern Server empfangen. Nach dem Empfangen der Dienstdaten können diese aufbereitet werden und dem Teilnehmer bzw. dem Teilnehmermodul zur Verfügung gestellt werden. Hierzu können diese Dienstdaten, z.B. über das Telekommunikationsnetz, an den netzseitigen Teilnehmer bzw. das Teilnehmermodul übertragen werden.

Gemäß einem vorteilhaften Ausführungsbeispiel wird vorgeschlagen, dass die Dienstinformationen enthaltende Mitteilung zumindest eine Teilnehmeridentifikation und eine weitere eindeutige Benutzerkennung enthält. Die Teilnehmeridentifikation kann beispielsweise die Teilnehmerkennung oder -nummer des Teilnehmers sein, der den Dienst in Anspruch nehmen möchte. Eine weitere eindeutige Benutzerkennung kann beispielsweise eine Teilnehmerkennung oder -nummer eines Benutzers sein, der den netzseitigen Dienstserver genutzt hat, z.B. auf den Anrufbeantworter gesprochen hat. Auch kann die Benutzerkennung ein sogenannter "Alias" sein, der einen Nutzer innerhalb eines Netzwerkes, z.B. ein soziales Netzwerk, kennzeichnet. Die eindeutige Benutzerkennung kann beispielsweise auch eine Emailadresse sein. Beispielsweise ist es möglich, dass ein netzseitiger Instant-Messaging-Dienst eine Dienstinformation an ein Teilnehmermodul übermittelt, dergestalt, dass ein bestimmter Teilnehmer eine Nachricht hinterlassen hat. In dieser Dienstinformation kann die eindeutige Benutzerkennung desjenigen Teilnehmers enthalten sein, der die Nachricht hinterlassen hat. Um diese Nachricht abzurufen, kann der Server gegenständlich die eindeutige Benutzerkennung verwenden. Eine weitere Anwendungsmöglichkeit könnte beispielsweise darin bestehen, dass Daten von einem Teilnehmer A in ein Netzwerk eingestellt wurden und daraufhin ein anderer Teilnehmer B darüber informiert wird, dass neue Daten zur Verfügung stehen. Um diese Daten nun mittels des externen Servers abrufen zu können, kann ebenfalls die eindeutige Benutzerkennung des Teilnehmers A verwendet werden, die es erlaubt, auf das Benutzerkonto, oder den öffentlichen Bereich des Benutzerkontos des Teilnehmers A zuzugreifen, der die Daten eingestellt hat. Somit kann das Teilnehmermodul des Teilnehmers B über den externen Server das Abrufen dieser Daten veranlassen.

Gemäß einem vorteilhaften Ausführungsbeispiel kann ein netzseitiger Dienst ein Anrufbeantworterdienst sein. In diesem Fall kann beispielsweise die eindeutige Benutzerkennung eine Rufnummer eines Teilnehmers sein. Versucht ein Teilnehmer B einen Teilnehmer A zu erreichen und ist der Teilnehmer A nicht erreichbar, so kann netzseitig ein Anrufbeantworterdienst aktiviert werden. Der Teilnehmer B kann daraufhin eine Nachricht in Form von Text-, Audio- und/oder Videodaten auf dem netzseitigen Anrufbeantworter hinterlegen. Zusammen mit diesen Daten (der Nachricht) wird die Rufnummer des Teilnehmers B gespeichert. Nachdem die Nachricht des Teilnehmers B aufgezeichnet wurde, kann mittels des Anrufbeantworterdienstes eine Dienstmitteilung an Teilnehmer A ausgesendet werden. Diese Mitteilung kann beispielsweise eine Kurzmitteilung sein. In dieser Mitteilung kann neben der Information, dass eine Nachricht schlechthin hinterlegt wurde, auch die eindeutige Benutzerkennung des Teilnehmers B in Form einer Rufnummer enthalten sein. Somit wird dem Teilnehmermodul des Teilnehmers A signalisiert, dass Daten zum Abruf auf dem netzseitigen Dienstserver bereitstehen.

Gemäß einem vorteilhaften Ausführungsbeispiel ist es möglich, dass nach dem Empfang einer solchen Dienstmitteilung von einem netzseitigen Dienstserver das Teilnehmermodul automatisch diese Mitteilung an den externen Server übermittelt. Dies kann ebenfalls über das Telekommunikationsnetz erfolgen. Das automatische Übermitteln dieser Mitteilung samt der enthaltenen Dienstinformation kann beispielsweise durch ein auf dem Teilnehmermodul gespeichertes Programm, beispielweise eine mobile Java-Applikation, oder eine sonstige Applikation oder ein Agent, ausgeführt werden. Um gegenüber dem Dienstserver den Teilnehmer bzw. das Teilnehmermodul zu emulieren, und die Dienstdaten von dem Dienstserver abrufen zu können, ist neben einer Teilnehmeridentifikation, z.B. eine Teilnehmerkennung/ - nummer, auch eine Authentisierungskennung, beispielsweise in Form eines PIN-Codes oder eines Passwortes notwendig. Der Zugriff auf die Daten wird nur bei erfolgreicher Authentisierung gegenüber dem Dienstserver freigegeben.

Um die Nutzung des Dienstes möglicht komfortabel zu gestalten, wird vorgeschlagen, dass in dem externen Server die Authentisierungskennung des Teilnehmers hinterlegt ist. Diese kann der Teilnehmeridentifikation zugeordnet hinterlegt sein. Empfängt der externe Server nun die Dienstinformation enthaltende Mitteilung, kann serverseitig anhand der in der Mitteilung enthaltenden Teilnehmeridentifikation die Authentisierungskennung des Teilnehmers aus dem Speicher gelesen werden. Diese Authentisierungskennung zusammen mit der Teilnehmeridentifikation kann dazu genutzt werden, den netzseitigen Teilnehmer gegenüber dem Dienstserver zu emulieren. Ein Anmelden bei dem Dienstserver erfolgt somit unter Verwendung der Teilnehmeridentifikation und der Authentisierungskennung. Ein Zugriff auf die Dienstdaten ist somit möglich. Der Dienstserver kann nicht erkennen, ob der Zugriff von dem Teilnehmer selbst über einen externen Zugang erfolgt ist oder von dem Server initiiert wurde. Der Dienstserver stellt die Dienstdaten zur Verfügung.

Handelt es sich bei dem Dienstserver um einen Anrufbeantworter, können die Dienstdaten beispielsweise Audiodaten sein, die gespeicherte Mitteilungen von anderen Teilnehmern enthalten. Diese Daten können gemäß einem vorteilhaften Ausführungsbeispiel von dem externen Server geladen werden. Gemäß einem vorteilhaften Ausführungsbeispiel können die geladenen Daten, sei es Audio- oder Video- oder sonstige Multimediadaten, zusammen mit der Benutzerkennung unter Verwendung der Teilnehmeridentifikation an das Teilnehmermodul des Teilnehmers übertragen werden. Zuvor ist es möglich, dass die Daten überarbeitet werden. So ist beispielsweise ein Transponieren der Daten von einem ersten Format in ein zweites Format möglich. Auch kann eine Kompression der Daten erfolgen. Die bearbeiteten oder unbearbeiteten Daten können über das Telekommunikationsnetz an den Teilnehmer bzw. das Teilnehmermodul übertragen werden. In dem Teilnehmermodul können die empfangenen Dienstdaten dann gespeichert werden und wahlfrei durch den Teilnehmer abgerufen werden.

Ein automatisches Abrufen von Dienstdaten wird gemäß einem vorteilhaften Ausführungsbeispiel dadurch ermöglicht, dass der Server durch das Empfangen der Dienstinformationen von dem netzseitigen Teilnehmer aktiviert wird. Auf dem Teilnehmermodul kann ein Programm installiert sein, welches laufend das Eingehen von Dienstinformationen überwacht und beim Eingehen einer Dienstinformation diese unmittelbar an den externen Server überträgt. Hierzu kann eine Datenverbindung mit dem Server aufgebaut werden. Der Server kann eine eindeutige Adresse aufweisen, mit deren Hilfe das Teilnehmermodul eine Verbindung mit dem Server aufbauen kann.

Ein weiterer Gegenstand ist ein Verfahren nach Anspruch 8.

Gemäß einem vorteilhaften Ausführungsbeispiel wird vorgeschlagen, dass die Dienstinformation eine Anrufbenachrichtigung von dem Dienst ist, wobei die Anrufbenachrichtigung zumindest die Benutzerkennung des anrufenden Teilnehmers enthält. Eine solche Dienstinformation kann beispielsweise mittels einer SMS an den Teilnehmer bzw. das Teilnehmermodul übertragen werden.

Um einen reibungsfreien, schnellen Abruf der Dienstdaten zu ermöglichen, wird vorgeschlagen, dass beim Empfangen der Dienstinformationen die Mitteilung an den Server automatisch versendet wird. Die Mitteilung kann unverändert beispielsweise über eine Datenverbindung an den Server übertragen werden.

Gemäß einem vorteilhaften Ausführungsbeispiel wird vorgeschlagen, dass die empfangenen Dienstdaten in einem Teilnehmermodul gespeichert werden. Die Dienstdaten können beispielsweise die von dem Anrufbeantworterdienst gespeicherten Audiodaten sein. Diese können in dem Teilnehmermodul so lange gespeichert bleiben, bis sie durch den Benutzer gelöscht werden. Durch das Speichern ist es möglich, wahlfrei auf die Dienstdaten zuzugreifen. Ein sequentielles Abrufen der Dienstdaten ist nicht mehr notwendig. Durch das Speichern ist es ebenfalls möglich, die Dienstdaten um weitere, in dem Teilnehmermodul gespeicherte Informationen zu ergänzen.

Aus diesem Grunde wird vorgeschlagen, dass die empfangenen Dienstdaten zu in dem Teilnehmermodul gespeicherten Benutzerinformationen mit Hilfe der Benutzerkennung zugeordnet werden. In den Dienstdaten ist eine Benutzerkennung gespeichert. Zu dieser Benutzerkennung kann in dem Teilnehmermodul beispielsweise ein Name, ein Foto oder eine sonstige Information gespeichert sein. Ein Zuordnen der Benutzerinformationen zu den Dienstdaten ermöglicht es, den Zugriff auf die Dienstdaten zu erleichtern, da der Benutzer des Teilnehmermoduls sofort erkennt, von welchem Benutzer die in den Dienstdaten gespeicherten Informationen stammen.

Ein weiterer Aspekt ist ein Server gemäß Anspruch 13.

Darüber hinaus wird ein Teilnehmermodul gemäß Anspruch 14 beansprucht.

Nachfolgend wird der Gegenstand anhand einer Ausführungsbeispiele zeigenden Zeichnung näher erläutert. In der Zeichnung zeigen:
- Fig. 1: einen schematischen Aufbau eines Systems gemäß einem Ausführungsbeispiel;
- Fig. 2: ein Ablaufdiagramm gemäß einem Ausführungsbeispiel;
- Fig. 3: ein Ablaufdiagramm gemäß einem weiteren Ausführungsbeispiel.

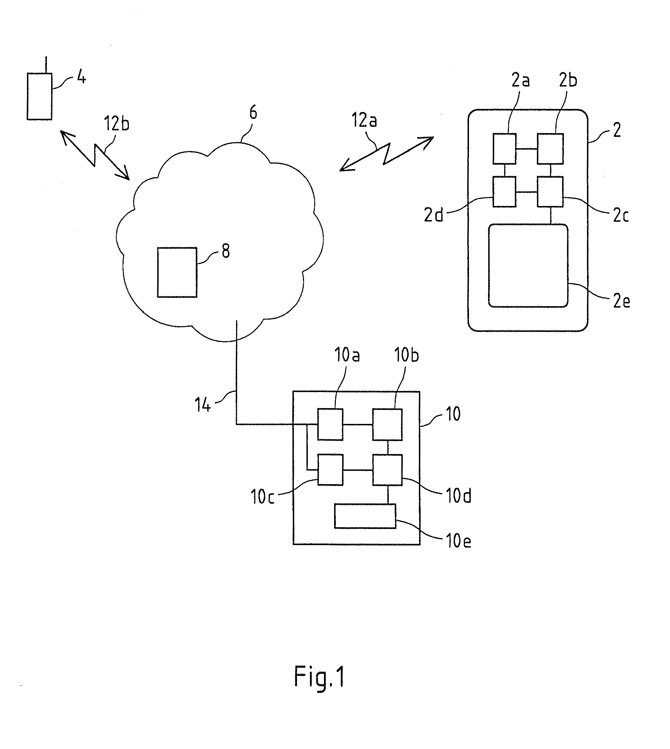

Fig. 1 zeig ein Teilnehmermodul 2. In dem Teilnehmermodul 2 ist eine Sendeeinrichtung 2a und eine Empfangseinrichtung 2b angeordnet. Die Sendeeinrichtung 2a als auch die Empfangseinrichtung 2b ist eingerichtet, um über eine Luftschnittstelle 12a eines Kommunikationsnetzes 6, vorzugsweise eines Mobilfunknetzes Daten zu senden bzw. zu empfangen. In dem Teilnehmermodul 2 ist weiterhin ein Speicher 2c vorgesehen. Der Speicher 2c ermöglicht es zum Einen, zu Benutzerkennungen zugeordnete weitergehende Informationen, wie Name, Adresse, Foto oder dergleichen abzuspeichern. In dem Speicher 2c können zum Anderen Dienstdaten, wie beispielsweise Audio-, Video,- und/oder Textnachrichten, gespeichert werden

Darüber hinaus ist in dem Teilnehmermodul 2 ein Mikroprozessor 2d angeordnet, der die Sendeeinrichtung 2a, die Empfangseinrichtung 2b, den Speicher 2c als auch weitere im Teilnehmermodul 2 angeordnete Einrichtungen ansteuert. Der Mikroprozessor 2d kann mittels eines Softwareprogramms derart programmiert sein, um das gegenständliche Verfahren auf den Teilnehmermodul auszuführen.

Schließlich ist in dem Teilnehmermodul 2 ein Display 2e angeordnet. Auf dem Display 2e können Dienstdaten bzw. Teile von Dienstdaten, die über die Empfangseinrichtung 2b empfangen wurden und/oder in dem Speicher 2c gespeichert sind, darstellt werden. Außerdem können Audionachrichten über einen nicht dargestellten Lautsprecher wiedergegeben werden.

Fig. 1 zeigt darüber hinaus ein Telekommunikationsnetz 6, welches beispielsweise ein zellulares Mobilfunknetz sein kann. In Fig. 1 ist ein weiteres Teilnehmermodul 4 dargestellt, welches entsprechend Teilnehmermodul 2 gebildet sein kann. Das Teilnehmermodul 4 kommuniziert mit dem Kommunikationsnetz 6 über die Luftschnittstelle 12b.

In dem Telekommunikationsnetz 6 kann ein Anrufbeantworterdienst auf einem Dienstserver 8 als netzintegrierter Dienst eingerichtet sein.

Ein Zugriff auf das Telekommunikationsnetz 6 und somit den Dienstserver 8 ist über einen Zugang 14 möglich. Der Zugang 14 kann dabei beispielsweise über ein Weitverkehrsnetz hergestellt werden. In dem externen Server 10 ist eine Sendeeinrichtung 10a und eine Empfangseinrichtung 10b vorgesehen. Darüber hinaus ist in dem externen Server 10 eine Emulationseinrichtung 10c vorgesehen. Schließlich ist in dem Server 10 ein Speicher 10d und ein Mikroprozessor 10e vorgesehen. Der Mikroprozessor 10e kann mittels eines Computerprogramms derart programmiert sein, dass das gegenständliche Verfahren auf dem Server 10 ausgeführt wird.

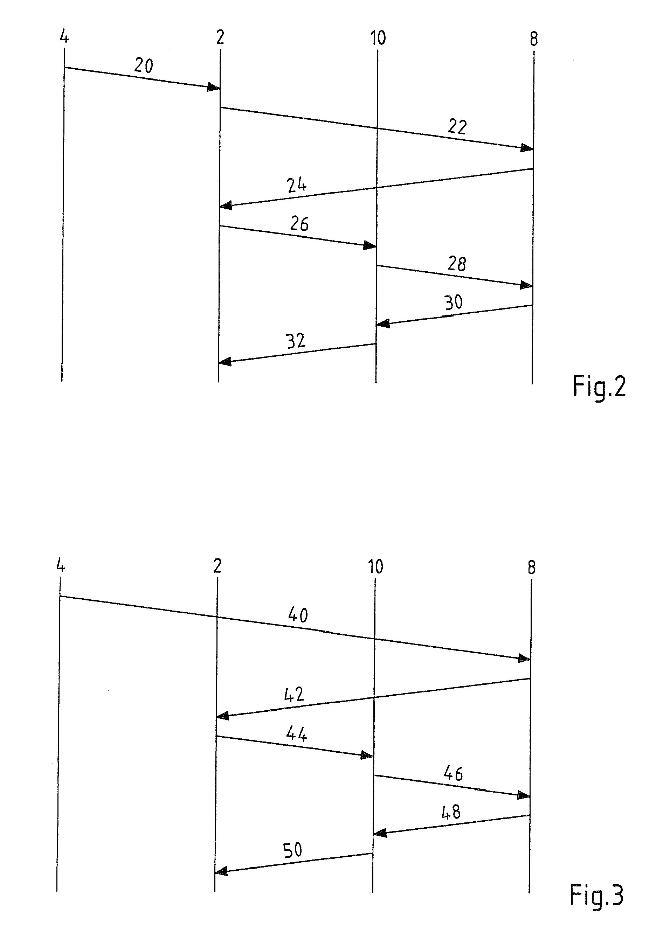

Wie bereits zuvor erläutert, kann mittels des externen Servers 10 der Dienstserver 8 abgefragt werden. Eine mögliche Abfrage ist in Fig. 2 als Ablaufdiagramm dargestellt.

Fig. 2 zeigt beispielsweise die Realisierung eines Visual-Voicemail Dienstes unter Verwendung eines herkömmlichen netzintegrierten Anrufbeantworterdienstes auf dem Dienstserver 8. Bei einem Anruf (20) von dem Teilnehmermodul 4 an das Teilnehmermodul 2 kann es dazu kommen, dass der Anruf (20) nicht beantwortet wird. Dieses Nichtbeantworten kann einerseits darin liegen, dass das Teilnehmermodul 2 nicht erreichbar ist oder der Teilnehmer des Teilnehmermoduls 2 den Anruf (20) nicht annimmt. Beide Ereignisse werden innerhalb des Telekommunikationsnetzes 6 detektiert und gegebenenfalls wird der Anruf an den Dienstserver 8 weitergeleitet (22). Beim Weiterleiten (22) wird das Teilnehmermodul 4 auf den Dienstserver 8, der im dargestellten Fall ein Anrufbeantworterdienst ist, umgeleitet.

Der Teilnehmer 4 kann dann eine Nachricht auf dem Dienstserver 8 hinterlassen. Diese Nachricht kann eine Multimedia-Nachricht sein, beispielsweise eine Audio-, Video- oder eine Textnachricht. Die Nachricht wird in dem Dienstserver 8 in einem Speicher gespeichert. Beim Weiterleiten (22) des Anrufs (20) des Teilnehmermoduls 4 wird auch eine Benutzerkennung des Teilnehmermoduls 4 an den Dienstserver 8 übermittelt. Zusammen mit der gespeicherten Nachricht kann die Benutzerkennung in dem Dienstserver 8 gespeichert werden. Nach Abschluss der Nachricht wird die Verbindung zwischen den Teilnehmermodul 4 und dem Dienstserver 8 unterbrochen.

Im Anschluss daran sendet (24) der Dienstserver 8 eine Dienstmitteilung, die Dienstinformationen enthält, über das Telekommunikationsnetz 6 und die Luftschnittstelle 12a an das Teilnehmermodul 2. In der Dienstmitteilung kann als Dienstinformation zum Einen die Information hinterlegt sein, dass ein Anruf durch den Dienstserver 8 aufgezeichnet wurde. Zum Anderen kann die mit der aufgezeichneten Nachricht gespeicherte Benutzerkennung des Teilnehmermoduls 4 in der Dienstmitteilung als Dienstinformation gesendet (24) werden.

Die gesendete (24) Dienstinformation wird in der Empfangseinrichtung 2b des Teilnehmermoduls 2 empfangen. Die Dienstinformation enthaltene Dienstmitteilung wird dann in dem Speicher 2c des Teilnehmermoduls 2 gespeichert.

In dem Mikroprozessor 2d des Teilnehmermoduls 2 kann ein Programm aktiviert sein, welches laufend den Eingang von Dienstmitteilungen überwacht. Dies kann zum Einen durch ein Überwachen der Empfangseinrichtung 2b erfolgen, zum Anderen auch durch ein Überwachen des Speichers 2c, ob neue Dienstmitteilungen gespeichert wurden. Stellt der Mikroprozessor 2d bzw. das auf dem Mikroprozessor 2d laufende Programm fest, dass eine neue Dienstmitteilung eingegangen ist, wird diese Dienstmitteilung von dem Mikroprozessor 2d an die Sendeeinrichtung 2a übergeben und von dort an den externen Server 10 über die Luftschnittstelle 12a, das Telekommunikationsnetz 6 und den Zugang 14 übermittelt (26).

Der externe Server 10 bzw. die Empfangseinrichtung 10b empfängt die entsprechende Dienstmitteilung und die darin enthaltenen Dienstinformationen. Die Dienstmitteilung mit den darin enthaltenen Dienstinformationen werden in dem Speicher 10d gespeichert. Nach Empfang einer Dienstmitteilung veranlasst der Mikroprozessor 10e die Emulationseinrichtung 10c und die Sendeeinrichtung 10a mit der Kontaktierung des Servers 8 über den Zugang 14. Hierzu wird aus der Dienstmitteilung bzw. den Dienstinformationen die Teilnehmerkennung des Teilnehmermoduls 2 extrahiert. Anhand der Teilnehmerkennung des Teilnehmermoduls 2 kann aus dem Speicher 10d eine Authentisierungskennung, die dem Teilnehmermodul 2 zugeordnet ist, gelesen werden.

Die Emulationseinrichtung 10c kann mittels der Teilnehmererkennung des Teilnehmermoduls 2 und der Authentisierungskennung des Teilnehmermoduls 2 über den Zugang 14 Kontakt (28) mit dem Dienstserver 8 aufnehmen. Dabei simuliert die Emulationseinrichtung 10c einen Zugriff des Teilnehmermoduls 2 auf den Dienstserver 8. D.h., beim Zugriff des externen Servers 10 auf den Dienstserver 8 wird zur Authentisierung die Teilnehmererkennung und die Authentisierungskennung des Teilnehmermoduls 2 verwendet. Hiermit ist ein Login auf den Dienstserver 8 möglich.

Nachdem sich der externe Server 10 an dem Dienstserver 8 als Teilnehmermodul 2 angemeldet hat, wird aus der Dienstmitteilung bzw. der Dienstinformation, die in dem Speicher 10d gespeichert ist, die Benutzerkennung des Teilnehmermoduls 4 gelesen. Weitere Informationen können beispielsweise der Zeitpunkt des Anrufs (20) sein. Mit diesen Informationen kann von dem Dienstserver 8 die gespeicherte Nachricht abgerufen werden.

Beim Abruf wird die gespeicherte Nachricht von dem Dienstserver 8 an den externen Server 10 über den Zugang 14 übertragen (30). Die übertragenen Dienstdaten enthalten zumindest die auf dem Dienstserver 8 gespeicherte Nachricht. Diese Dienstdaten werden in dem externen Server 10 mit den Dienstinformationen, die in dem Speicher 10d gespeichert sind, verknüpft und in dem Speicher 10d hinterlegt.

Im Anschluss an das Abrufen der Dienstdaten stellt der externe Server 10 eine Verbindung (32) mit dem Teilnehmermodul 2 über den Zugang 14, das Telekommunikationsnetz 6 und die Luftschnittstelle 12a her. Über diese Verbindung überträgt der Server 10 mittels der Sendeeinrichtung 10a die gespeicherten Dienstdaten an das Teilnehmermodul 2. In dem Teilnehmermodul 2 werden diese Dienstdaten mittels der Empfangseinrichtung 2b empfangen und in dem Speicher 2c gespeichert. Dieses Empfangen und Speichern kann ebenfalls durch den Mikroprozessor 2d gesteuert sein.

Im Anschluss daran kann über das Display 2e auf die gespeicherten Dienstdaten zugegriffen werden. Die gespeicherten Dienstdaten sind beispielsweise gespeicherte Audionachrichten. Über das Display 2e oder über eine Tastatur (nicht dargestellt) kann wahlfrei auf die in dem Speicher 2c gespeicherten Dienstdaten, d.h. die gespeicherten Nachrichten, zugegriffen werden.

Beim Speichern der Dienstdaten in dem Speicher 2c werden mittels des Mikroprozessors 2d und der zugehörigen Benutzerkennung, welche in der Dienstinformation enthalten war, weitere Informationen zu dem Benutzer des Teilnehmermoduls 4 ermittelt und den Dienstdaten zugeordnet. Dies kann beispielsweise darin bestehen, dass den Dienstdaten ein Name des Benutzers des Teilnehmermoduls 4 oder ein Foto zugeordnet wird.

Wenn nun eine Vielzahl von Dienstdaten in dem Speicher 2c gespeichert sind, können diese wahlfrei aus dem Speicher 2c ausgelesen und abgerufen werden.

Durch das beschriebene Verfahren ist es möglich, einen sogenannten Visual-Voicemail Dienst zur Verfügung zu stellen, ohne dass der netzintegrierte Dienstserver 8 diesen Dienst unterstützt.

Fig. 3 zeigt ein ähnliches Verfahren, bei dem jedoch keine Anrufbeantworterfunktion unterstützt wird, sondern beispielsweise das Einstellen einer Email in einen netzintegrierten Dienstserver 8. Hierbei kann beispielsweise von dem Teilnehmermodul 4 unmittelbar über die Luftschnittstelle 12b und das Telekommunikationsnetz 6 eine Emailnachricht an den Dienstserver 8 übermittelt (40) werden. Nach dem Empfang der Email kann der Dienstserver 8 dieses Ereignis dem Teilnehmermodul 2 über das Telekommunikationsnetz 6 und die Luftschnittstelle 12a signalisieren (42).

Dieses Signalisieren (42) kann beispielsweise darin bestehen, dass dem Teilnehmermodul 2 lediglich mitgeteilt wird, dass eine Email empfangen wurde. Ein Abrufen der Email kann jedoch in der gezeigten Anordnung nicht unmittelbar von dem Teilnehmermodul 2 durch Zugriff auf den Dienstserver 8 erfolgen, sondern erforderte beispielweise den Zugriff über ein Internetbrowser.

Um nun den Zugriff unmittelbar durch das Teilnehmermodul zu unterstützen, kann es möglich sein, dass das Teilnehmermodul die empfangene Dienstmitteilung samt den Dienstinformationen an den externen Server 10 weiterleitet (44). Der externe Server 10 fragt nun durch Verwendung des Zugangs 14 und Emulation des Teilnehmermoduls 2 die gespeicherte Emailnachricht von den Dienstserver 8 ab (46). Hierbei lädt (48) der externe Server 10 von dem Dienstserver 8 die gespeicherte Emailnachricht. Im Anschluss daran kann der externe Server 10 die geladene Emailnachricht das Teilnehmermodul 2 übermitteln (50), wobei dies über die Sendeeinrichtung 10a, den Zugang 14, das Telekommunikationsnetz 6, die Luftschnittstelle 12a und die Empfangseinrichtung 2b erfolgt. Die übertragene Emailnachricht kann in dem Speicher 2c des Teilnehmermoduls 2 gespeichert werden.

Weitere Mehrwertdienste sind ebenfalls durch das gegenständliche Verfahren umfasst.

## Patentansprüche

1. Verfahren zur Steuerung eines für ein
Telekommunikationsnetz (6) eingerichteten Dienstes durch einen externen Server (10) mit den Schritten:
- serverseitiges Empfangen (26, 44) einer
Dienstinformationen enthaltenden Mitteilung von einem netzseitigen Teilnehmer (2),
- serverseitiges Verbinden (46) mit dem Dienst,
- serverseitiges Emulieren des netzseitigen Teilnehmers (2) gegenüber dem Dienst unter Verwendung zumindest der empfangenen Dienstinformationen,
- serverseitiges Empfangen (30, 48) von Dienstdaten von dem Dienst aufgrund des Emulierens des netzseitigen Teilnehmers (2), und
- serverseitiges Weiterleiten (32, 50) der Dienstdaten an den netzseitigen Teilnehmer (2).

2. Verfahren nach Anspruch 1, **dadurch gekennzeichnet, dass** die Dienstinformationen enthaltende Mitteilung zumindest eine Teilnehmeridentifikation und eine weitere eindeutige Benutzerkennung enthält.

3. Verfahren nach Anspruch 2, **dadurch gekennzeichnet, dass** die eindeutige Benutzerkennung eine Rufnummer eines Teilnehmers (4) ist, wobei die Rufnummer durch den Dienst erfasst wurde.

4. Verfahren nach Anspruch 2 oder 3, **dadurch gekennzeichnet, dass** eine serverseitig gespeicherte, der Teilnehmeridentifikation zugeordnete Authentisierungskennung ermittelt wird, und dass mit Hilfe der Teilnehmeridentifikation und der Authentisierungskennung der netzseitige Teilnehmer (2) gegenüber dem Dienst emuliert wird.

5. Verfahren nach einem der Ansprüche 1 bis 4, **dadurch gekennzeichnet, dass** die empfangenen (30, 48) Dienstdaten zumindest Audio- und/oder Videodaten enthalten.

6. Verfahren nach Anspruch 1, **dadurch gekennzeichnet, dass** die empfangenen (30, 48) Dienstdaten zusammen mit der eindeutigen Benutzerkennung an den netzseitigen Teilnehmer (2) übermittelt (32, 50) werden.

7. Verfahren nach Anspruch 1, **dadurch gekennzeichnet, dass** der Server durch das Empfangen (24, 42) der Dienstinformationen von dem netzseitigen Teilnehmer (2) aktiviert wird.

8. Verfahren zur Steuerung eines für ein
Telekommunikationsnetz eingerichteten Dienstes durch einen netzseitigen Teilnehmer mit den Schritten:
- teilnehmerseitiges Empfangen (22, 40) von Dienstinformationen von dem Dienst,
- teilnehmerseitiges Übermitteln (26, 44) einer die Dienstinformation enthaltenden Mitteilung über das Telekommunikationsnetz an den Server (10),
- teilnehmerseitiges Empfangen (32, 50) von den Dienstinformationen zugeordneten Dienstdaten von dem Server (10) über das Telekommunikationsnetz.

9. Verfahren nach Anspruch 8, **dadurch gekennzeichnet, dass** die Dienstinformation eine Anrufbenachrichtigung von dem Dienst ist, wobei die Anrufbenachrichtigung zumindest die Benutzerkennung des anrufenden Teilnehmers enthält.

10. Verfahren nach Anspruch 8, **dadurch gekennzeichnet, dass** beim Empfangen (24, 42) der Dienstinformationen die Mitteilung an den Server automatisch versendet (26, 44) wird.

11. Verfahren nach Anspruch 8, **dadurch gekennzeichnet, dass** die empfangenen (24, 42) Dienstdaten in einem Teilnehmermodul (2) gespeichert werden.

12. Verfahren nach Anspruch 12, **dadurch gekennzeichnet, dass** die empfangenen (24, 42) Dienstdaten zu in dem Teilnehmermodul gespeicherten Benutzerinformationen mit Hilfe der Benutzerkennung zugeordnet werden.

13. Server eingerichtet zur Steuerung eines für ein Telekommunikationsnetz eingerichteten Dienstes mit:
- einer Empfangseinrichtung (10b) eingerichtet zum Empfangen einer Dienstinformationen enthaltenden Mitteilung von einem netzseitigen Teilnehmer,
- einer Sendeeinrichtung (10a) eingerichtet zum Verbinden mit dem Dienst über das Telekommunikationsnetz,
- einer Emulationseinrichtung (10c) eingerichtet zum Emulieren des netzseitigen Teilnehmers gegenüber dem Dienst unter Verwendung zumindest der empfangenen Dienstinformationen,
- wobei die Empfangseinrichtung (10b) zum Empfangen von Dienstdaten von dem Dienst über das Telekommunikationsnetz aufgrund des Emulierens des netzseitigen Teilnehmer eingerichtet ist, und
- wobei die Sendeeinrichtung (10a) zum Weiterleiten der Dienstdaten an das netzseitige Telefon über das Telekommunikationsnetz eingerichtet ist.

14. Teilnehmermodul eingerichtet zur Steuerung eines für ein Telekommunikationsnetz eingerichteten Dienstes mit:
- einer Empfangseinrichtung (2b) eingerichtet zum Empfangen von Dienstinformationen von dem Dienst,
- einer Sendeeinrichtung (2a) eingerichtet zum Übermitteln einer die Dienstinformation enthaltenden Mitteilung über das Telekommunikationsnetz an den Server (10),
- wobei die Empfangseinrichtung (2b) zum Empfangen von den Dienstinformationen zugeordneten Dienstdaten von dem Server (10) über das Telekommunikationsnetz eingerichtet ist.
